Europäisches Patentamt

European Patent Office

Office européen des brevets

(11) Numéro de publication: **0 489 954 A1**

## DEMANDE DE BREVET EUROPEEN

(21) Numéro de dépôt: **90123893.1**

(22) Date de dépôt: **12.12.90**

(51) Int. Cl.5: **A23L 1/01**, A47J 39/00

(43) Date de publication de la demande:
**17.06.92 Bulletin 92/25**

(84) Etats contractants désignés:
**AT BE CH DE DK ES FR GB GR IT LI LU NL SE**

(71) Demandeur: **SOCIETE DES PRODUITS NESTLE S.A.**
**Case postale 353**
**CH-1800 Vevey(CH)**

(72) Inventeur: **Jamet, Luc**
**22, rue du Maréchal de Boufflers**
**F-60000 Beauvais(FR)**

(54) Procédé et dispositif pour la cuisson d'un produit alimentaire à l'air humide chaud.

(57) Dans une enceinte 1 d'un four est placé une bande transporteuse 3 sur laquelle est placé un produit alimentaire à traiter. Des moyens 5,6,7,9 permettent de diriger un flux vertical descendant d'air humide chaud au travers du produit à traiter.

Application au traitement à l'air humide chaud d'un produit alimentaire.

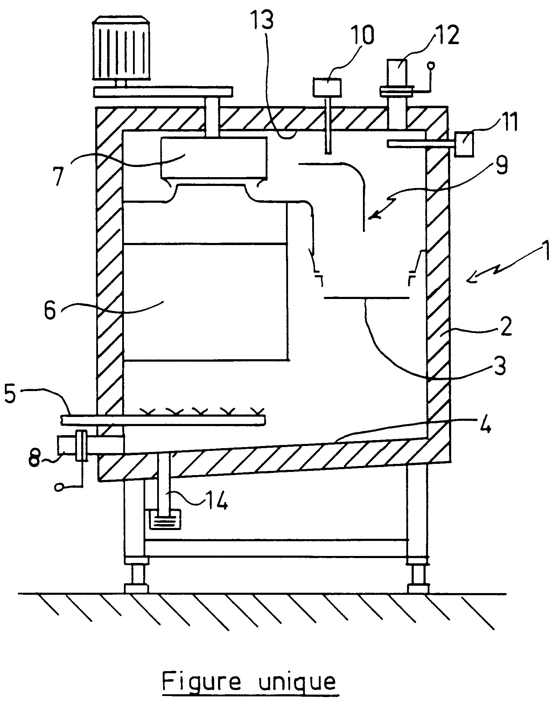

Figure unique

La présente invention est relative à un procédé et à un dispositif pour la cuisson d'un produit alimentaire à l'air humide chaud.

La présente invention est plus particulièrement relative à la cuisson, totale ou partielle, d'un produit alimentaire par des jets d'air humide chaud dirigés contre la surface du produit à traiter. Des installations dans lesquelles est transférée de l'énergie thermique à un produit alimentaire par circulation d'air humide chaud sont connues. Dans ces installations, telles que celles décrites par exemple dans les documents US 4.831.238, US 4.474.498 ou US 4.154.861, de l'air humide chaud est amené à venir en contact avec les faces supérieure et inférieure d'une grille transporteuse sur laquelle sont placés les produits à cuire, les produits se déplaçant, grâce à la grille transporteuse, à l'intérieur d'un four présentant de part et d'autre de la grille des moyens de mise en circulation de l'air humide chaud.

Ces moyens de mise en circulation sont constitués d'un ou de plusieurs ventilateurs, placés en position latérale aussi bien qu'au sommet ou la base du four, reliés à des circuits de dérivation divisant le flux d'air humide chaud créé en un flux vertical descendant et un flux vertical ascendant, de part et d'autre de la grille transporteuse.

Ainsi le produit à traiter se déplace perpendiculairement aux flux d'air humide chaud vertical descendant et vertical ascendant.

Les dispositifs de ce type présentent des insuffisances importantes qui rendent leur utilisation toujours délicate et parfois impossible en fonction des produits à traiter.

En premier lieu, la nécessité d'avoir une dérivation du flux d'air humide chaud combinée à une circulation supérieure et une circulation inférieure de ces flux, de part et d'autre de la grille transporteuse, pose des problèmes d'entretien, particulièrement dans la partie de l'installation située en dessous de la grille transporteuse où a lieu la circulation verticale ascendante du flux d'air.

En effet, les jus produits par la cuisson, totale ou partielle, des produits tombent inévitablement dans la partie inférieure de l'installation qui doit donc être démontée périodiquement, le faux plancher prévu plus particulièrement dans US 4.831.238 n'évitant pas l'accumulation des jus de cuisson sur les parois du circuit d'air humide chaud inférieur situé entre la grille transporteuse et le dit faux plancher.

De plus, et comme cela est d'ailleurs explicitement décrit dans les documents US 4.368.664 et US 4.338.911 qui sont relatifs à deux autres variantes des installations décrites ci-avant, la combinaison d'une circulation supérieure verticale descendante et d'une circulation inférieure verticale ascendante fait que les flux d'air humide chaud ne traversent pas le lit constitué des matériaux à traiter et de la grille transporteuse mais, bien au contraire, se réfléchissent contre ce lit.

Ceci diminue donc la circulation du flux d'air chaud sur les faces latérales entraînant ainsi une mauvaise cuisson de ces zones.

Ainsi, et bien que deux flux d'air humide chaud soient prévus de part et d'autre de la grille transporteuse, il est toujours nécessaire de remuer les produits à traiter en les retournant durant le processus de cuisson afin de permettre la cuisson des faces latérales.

Enfin, le réchauffement de la grille transporteuse, inévitablement causé par le flux inférieur vertical ascendant, entraîne automatiquement une élévation en température de celle-ci qui s'accompagne alors de phénomènes d'adhérence, de collage et parfois de calcination du produit à traiter.

La présente invention a ainsi pour but de permettre un traitement à l'air humide chaud qui, tout en évitant les problèmes d'adhérence, autorise un entretien aisé en obtenant par ailleurs des performances comparables à celles de l'art antérieur.

La présente invention a ainsi pour objet un procédé de cuisson d'un produit alimentaire par mise en contact d'un flux vertical descendant d'air humide chaud avec un lit de produit à traiter placé perpendiculairement au flux d'air humide chaud qui le traverse.

La présente invention a aussi pour objet un dispositif pour la mise en oeuvre du procédé ci-dessus comprenant une enceinte présentant un support du produit à traiter à grille horizontale et des moyens pour délivrer un flux d'air humide chaud, ces moyens ne permettant qu'une circulation verticale descendante du dit flux à travers le dit support.

Grâce, à cela, il n'est pas nécessaire de prévoir un dispositif quelconque d'amenée d'un flux d'air à la face inférieure du support du produit à traiter, dispositif qui serait inévitablement encrassé par les jus de cuisson du produit placé sur le convoyeur.

De plus, aucune partie du support en contact avec le produit à traiter n'est en même temps, et sur sa face opposée, en contact direct avec un flux d'air humide chaud. Il n'y a donc aucun échauffement néfaste de ce support de nature à entraîner des phénomènes d'adhérence du dit produit sur le dit support.

Enfin, l'écoulement d'un flux d'air chaud vertical permet de traiter les faces latérales du produit ce qui compense, en terme de durée du traitement, l'absence de traitement des faces inférieures. En effet, comme dans l'art antérieur, il est encore nécessaire de retourner le produit en cours de cuisson, cette fois-ci pour permettre le traitement des faces inférieures du dit produit. Mais cet inconvénient ne constitue pas, comme il vient d'être démontré , un inconvénient supplémentaire.

Par ailleurs, dans le procédé et le dispositif selon l'invention, la température sèche, la température humide et la durée du traitement sont contrôlées en fonction du produit à traiter et des résultats désirés.

D'autres caractéristiques et avantages ressortiront à la suite de la description qui va suivre faite en référence à la figure unique donnée seulement à titre d'exemple non limitatif et qui représente une vue schématique en coupe verticale du dispositif selon l'invention.

Comme illustré à la figure unique, le dispositif selon l'invention est constitué d'une enceinte 1 présentant des faces supérieure, inférieure et latérales en un matériau isolant 2.

A l'intérieur de cette enceinte 1 est placé un support, à mi-hauteur dans l'exemple de réalisation de la figure unique, à grille. Sur ce support est placé le produit alimentaire à traiter.

Préférablement, ce support peut être constitué d'une bande transporteuse 3, à grille, mobile horizontalement, selon un agencement connu tel que par exemple décrit dans US 4.831.238.

La figure unique est réalisée selon une coupe vertical perpendiculaire au sens d'avancement de la bande transporteuse 3. Comme on le voit sur cette figure unique, un plancher 4 de l'enceinte 1 est disposé incliné. Plus précisément, ce plancher 4 est incliné par rapport à une ligne horizontale perpendiculaire au sens d'avancement de la bande transporteuse 3.

Ce plancher 4 peut être refroidi pour éviter des phénomènes de collage des jus de cuisson sur ce plancher 4. Le refroidissement peut être réalisé par circulation d'eau dans ce plancher 4.

En effet, le plancher tend à s'équilibrer avec l'atmosphère de l'enceinte et peut donc atteindre, si il n'est pas refroidi, la température sèche de l'enceinte. Or, comme les exemples de réalisation le montreront, cette température sèche peut être élevée.

Ce plancher 4 peut constituer une face inférieure de l'enceinte 1 ou être rajouté, sous la forme d'un faux plancher, à cette face inférieure qui peut alors être horizontale, comme ceci est par exemple décrit dans US 4.831.238.

En outre, dans l'enceinte 1, sont prévus des moyens pour délivrer un flux d'air humide chaud selon une direction verticale descendante, à partir d'une zone située au-dessus de la bande transporteuse 3, à travers cette bande transporteuse 3.

Selon l'exemple de réalisation représenté à la figure unique, ces moyens pour délivrer le flux d'air humide chaud sont constitués d'une source 5 de vapeur d'eau située à la base de l'enceinte 1. Au-dessus de cette source 5, à côté de la bande transporteuse 3, est prévu un réchauffeur 6 surmonté par un ventilateur 7 qui aspire la vapeur d'eau issue de la source 5 ainsi que l'air humide situé sous le réchauffeur 6 et la bande transporteuse 3.

De plus, à proximité de la source de vapeur 5, préférentiellement en-dessous de celle-ci, est prévu une source 8 d'arrivée d'air, indépendante de la source de vapeur 5.

Un flux d'air humide chaud ressort donc du ventilateur 7 qui est prolongé par un circuit 9 d'amenée de ce flux d'air humide chaud à la face supérieure de la bande transporteuse 3, selon une direction verticale descendante.

Dans le circuit 9 sont prévus un thermomètre humide 10, un thermomètre sec 11, et un évent 12 situé dans le plafond 13 de l'enceinte 1. Enfin à la base de l'enceinte 1, à la partie basse du plancher 4, est prévu un dispositif d'écoulement 14 des liquides condensés et des jus de cuisson.

Exemple 1 :

Des navets crus, d'un calibre compris entre 40 mm et 70 mm, ont été pelés puis découpés en dés de 8 x 12 x 12 mm.

Ces navets ont ensuite été traités par le procédé et le dispositif selon l'invention pendant 14 minutes, avec une charge de 14 kg/m$^2$, à une température sèche de 120°C et une température humide de 85°C.

Le produit obtenu a ensuite été refroidi pendant 5 minutes à 20°C puis congelé à -40°C et stocké à -30°C.

Le produit se régénérait aisément par simple réchauffage et présentait l'aspect de navets fraîchement préparés sans dénaturation ou affaiblissement du goût.

Exemple 2 :

Des oignons ont été pelés et découpés puis trempés dans l'huile.

Ils ont ensuite subi un traitement selon l'invention à une température sèche de 160°C et une température humide de 87°C pendant 10 minutes avec une charge de 17 kg/m$^2$.

Ces oignons ont ensuite été refroidis à l'air ambiant pendant quelques minutes puis congelés.

Le produit, après régénération présentait l'aspect, la texture et le goût d'oignons rissolés longuement fondus dans une poêle, ceci tout en gardant leur fraîcheur et leur piquant et sans goût de matière grasse.

Malgré la température sèche élevée et l'utilisation d'huile, le processus a pu se dérouler normalement sans qu'apparaissent de phénomènes néfastes d'adhérence. De plus le dispositif a fait alors la preuve de sa facilité d'entretien suite à l'écoulement des jus de cuisson.

Exemple 3

Des carottes ont été lavées puis pelées et enfin découpées.

Elles ont finalement été traitées à l'air humide pendant 14 minutes à une température sèche de 100°C et une température humide de 96°C avec une charge de 23 kg/m$^2$.

Le produit a été finalement refroidi à l'air ambiant puis congelé.

Le produit obtenu présentait, après régénération, toutes les caractéristiques organoleptiques de carottes fraîchement cuites à la vapeur.

Ces exemples montrent bien que, tout en permettant un entretien beaucoup plus aisé de l'installation et en évitant par ailleurs des phénomènes d'adhérence du produit sur son support, les performances de l'installation et la qualité des produits obtenus sont tout à fait comparables à celles de l'art antérieur.

**Revendications**

1.  Procédé de cuisson d'un produit alimentaire par mise en contact d'un flux vertical descendant d'air humide chaud avec un lit de produit à traiter placé perpendiculairement au flux d'air humide chaud qui le traverse.

2.  Procédé selon la revendication 1 dans lequel la température sèche, la température humide et la durée du traitement sont contrôlées.

3.  Dispositif pour la mise en oeuvre du procédé selon l'une des revendications précédentes comprenant une enceinte présentant un support du produit à traiter à grille horizontale et des moyens pour délivrer un flux d'air humide chaud, ces moyens ne permettant qu'une circulation verticale descendante du dit flux à travers le dit support.

4.  Dispositif selon la revendication 3 dans lequel les moyens pour délivrer le flux d'air humide chaud sont constitués d'une source de vapeur d'eau et d'une source d'air indépendantes l'une de l'autre, un réchauffeur de ce mélange étant prévu qui est prolongé par un ventilateur qui dirige, par le biais d'un circuit 9, le dit flux d'air humide chaud à la face supérieure du dit support.

5.  Dispositif selon la revendication 3 dans lequel sont prévus un thermomètre sec, un thermomètre humide et un évent.

Figure unique

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | FR-A-603460 (M.E.GIRODIN)<br>* le document en entier * | 1, 3 | A23L1/01<br>A47J39/00 |
| Y | | 2, 4, 5 | |
| | --- | | |
| X | GB-A-552016 (W.W.SPOONER)<br>* revendications 1-6 *<br>* page 1, lignes 40 - 60 *<br>* page 2, lignes 22 - 76 *<br>* figures 1-3 * | 1, 3 | |
| | --- | | |
| Y | DERWENT FILE SUPPLIER WPIL,1990,AN No.90-296560<br>& SU-A-1529180 (UST-KAMENOGOR INSTR.)<br>* résumé * | 2, 5 | |
| | --- | | |
| Y | FR-A-2619613 (R.GRANDI)<br>* revendications 1, 2 *<br>* page 1, lignes 36 - 32 *<br>* figure 1 * | 4 | |
| | --- | | |
| A | FR-A-1484923 (FIRMA WILHELM FESSMAN SPEZIALFABRIK FUR METZGEREI-EINRICHTUNGEN)<br>* figure 2 * | 1, 3, 4 | **DOMAINES TECHNIQUES RECHERCHES (Int. Cl.5)**<br><br>A23L |
| | ----- | | |

Le présent rapport a été établi pour toutes les revendications

| Lieu de la recherche | Date d'achèvement de la recherche | Examinateur |
|---|---|---|
| LA HAYE | 31 JUILLET 1991 | VUILLAMY V.M.L. |